# FASCICULE DE BREVET EUROPEEN

(11) **EP 0 418 209 B1**
(45) Date de publication et mention de la délivrance du brevet: **23.11.1994**
(21) Numéro de dépôt: 90870097.4
(22) Date de dépôt: 21.06.1990
(51) Int. Cl.: G01M 3/16, E02D 31/00

(54) **Procédé de détection de fuites**
Leckaufspürverfahren
Leak detecting procedure

(30) Priorité: 21.06.1989 BE 8900675
(43) Date de publication de la demande: 20.03.1991
(73) Titulaire: S.A. UCO N.V., B-9218 Gent (Ledeberg) (BE)
(72) Inventeur: De Meerleer, Frans, B-1860 Meise (BE)
(74) Mandataire: Claeys, Pierre

(56) Documents cités:
- WO-A-88/06929
- WO-A-89/00681
- DE-A- 1 600 461
- DE-A- 3 011 500
- DE-A- 3 544 264
- FR-A- 1 212 327
- US-A- 4 404 516
- PATENT ABSTRACTS OF JAPAN, vol. 3, no. 153 (E-159), 15 décembre 1979, page 84 E 159; & JP-A-54 133 196

## Description

Cette invention se rapporte à un procédé de détection de fuites, en particulier de fuites dans une couche d'isolation, par exemple sous une décharge pour déchets industriels, déchets ménagers, dépôts de dragage pollués et analogues, ou par exemple sous un réservoir à liquides, comme décrit dans le préambule de la revendication 1.

On utilise comme couche d'isolation le plus souvent un film en matière synthétique mais d'autres matériaux, tels que par exemple de l'argile, peuvent éventuellement également être utilisés.

Avec les décharges, il est de grande importance qu'il n'y ait pas d'eau de percolation polluée qui puisse s'infiltrer vers les nappes phréatiques situées plus en profondeur et qu'on puisse détecter rapidement une infiltration éventuelle afin de pouvoir prendre ainsi les mesures appropriées.

Suivant un procédé connu, on applique à cet effet sous la couche d'isolation un deuxième film étanche à l'eau comprenant une couche de drainage située au-dessus de celui-ci, par exemple du sable, pourvue de tuyaux de drainage. De l'eau de fuite s'infiltrant éventuellement peut par conséquent être recueillie par les tuyaux de drainage.

Un inconvénient de ce système réside dans le fait que des fuites possibles dans la couche d'isolation ne peuvent pas être localisées et que celles-ci ne peuvent ainsi pas être réparées non plus. De plus, on n'a aucun contrôle sur des fuites éventuelles dans le deuxième film.

Un système de détection de fuites selon le préambule de la revendication 1 est déjà connu du document WO-A-88/06929. Selon ce système connu, on dispose sous la couche d'isolation un lit de sable et une deuxième couche d'isolation. Un premier jeu de fils conducteurs est fixé sur la face inférieure de la couche d'isolation supérieure et un deuxième jeu sur la face supérieure de la couche d'isolation inférieure. En mesurant la conductivité électrique entre les fils conducteurs dans chaque jeu, on peut détecter et également localiser une fuite.

Cependant, ce système connu présente certains désavantages et pose des problèmes en pratique.

Cette invention se rapporte ainsi à un procédé de détection de fuites, qui ne présente pas les inconvénients mentionnés et au moyen duquel on peut détecter et localiser avec une très grande précision des fuites de manière relativement peu coûteuse et simple, afin de permettre une réparation rapide de la couche d'isolation.

A cette fin, le procédé suivant l'invention présente les caractéristiques comme définies dans la partie caractérisante de la revendication 1.

Une caractéristique importante de l'invention est de disposer les fils conducteurs par paires de sorte qu'il faut moins de fils et moins de mesures.

Une telle disposition par paires des fils conducteurs destinés à la détection de fuites est déjà connue de FR-A-1 212 327. En particulier, ce document décrit un ruban protecteur sur lequel est disposé un matériau poreux comportant deux fils conducteurs. Ce ruban peut être disposé suivant un dessin entre-croisé pour l'application à des grandes surfaces comme, par exemple, les planchers, plafonds, murs, etc. Cette application diffère cependant tout à fait de l'application sous des couches d'isolation.

D'autres détails et avantages de l'invention ressortiront de la description qui sera donnée ci-après d'un procédé de détection de fuites et d'un géotextile utilisé à cet effet, suivant l'invention. Cette description est donnée uniquement à titre d'exemple et ne limite pas l'invention. Les chiffres de référence se rapportent aux dessins annexés.

La figure 1 représente une vue en coupe d'une décharge à laquelle est appliquée un procédé de détection de fuites suivant l'invention, sauf que les fils conducteurs ne sont pas disposés par paires.

La figure 2 représente un détail d'une partie d'un géotextile utilisé dans le procédé appliqué à la décharge selon la figure 1.

La figure 3 représente une vue suivant la flèche P3 de la figure 1.

Les mêmes références se rapportent à des éléments identiques ou analogues sur les différentes figures.

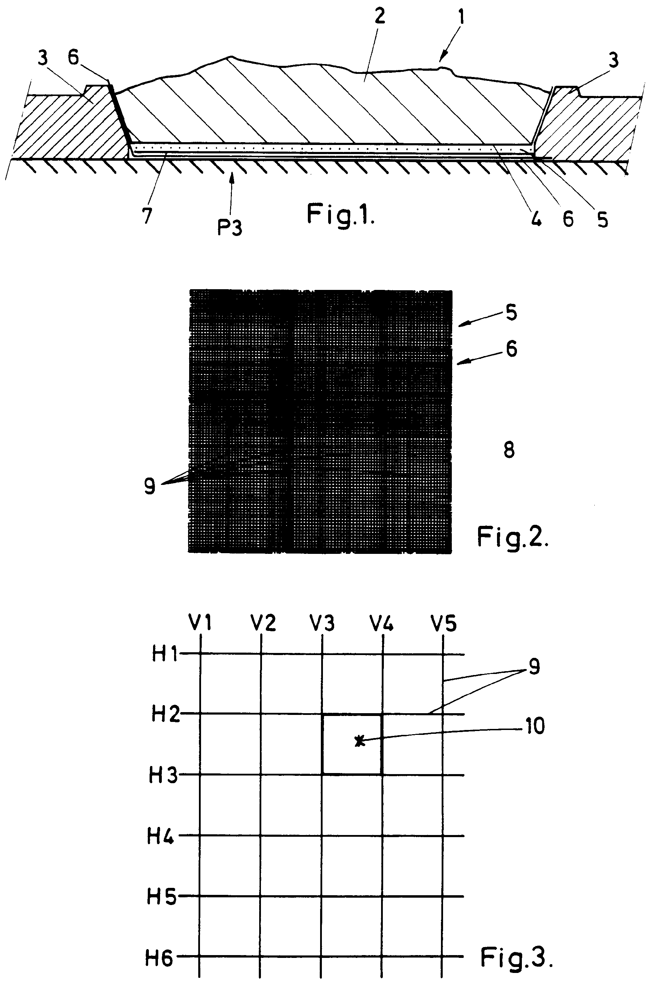

Le procédé de détection de fuites suivant l'invention est appliqué par exemple à une décharge 1 pour déchets industriels ou ménagers 2, comme illustré sur la figure 1.

Une telle décharge 1 est installée le plus souvent sous la surface du sol et elle peut être entourée de petites digues 3. Ceci forme un réservoir destiné aux déchets 2 dont tant les parois latérales que le fond sont isolés au moyen d'une couche d'isolation 4, le plus souvent sous la forme d'un film en matière synthétique, qui forme normalement une isolation étanche à l'eau.

On applique, suivant l'invention, sous la couche d'isolation 4 un premier et un deuxième géotextiles 5, respectivement 6, lesquels sont mutuellement séparés par une couche d'isolation 7, par exemple un non-tissé en matière synthétique 7.

Ainsi qu'il ressort de la figure 2, les deux géotextiles 5, 6 sont constitués par un tissu 8 en fils synthétiques, dans lesquels des fils conducteurs 9, par exemple des fils métalliques conducteurs, des polymères conducteurs et analogues, sont tissés. Ces fils conducteurs 9 peuvent éventuellement être tissés dans le tissu 8 ou être fixés au tissu 8 d'une autre manière encore. Au lieu d'un tissu 8 on pourrait également utiliser un réseau ou un non-tissé.

Aux figures, les fils 9 s'étendent de manière sensiblement parallèle et équidistants comme dans l'art antérieur en particulier selon WO-A-88/06929. Selon l'invention, cependant, il est essentiel de disposer les fils 9 par paires.

Les deux géotextiles 5, 6 sont appliqués sous la décharge 1 de manière telle que leurs fils conducteurs 9 forment l'un avec l'autre un angle aussi grand que possible et de préférence un angle d'approximativement 90°, comme représenté dans la forme de réalisation suivant la figure 3.

Ainsi qu'il ressortira ci-après, les fils conducteurs 9 de chaque géotextile 5, 6 doivent être accessibles au moins à une extrémité, ce qui est réalisé sur la figure 1 par le fait que les géotextiles 5, 6 s'étendent d'un côté jusqu'au côté extérieur de la digue 3.

Suivant une autre possibilité, les géotextiles 5, 6 sont amenés vers le haut le long du côté intérieur de la digue 3 à une extrémité de manière telle que les extrémités des fils conducteurs 9 soient accessibles au côté supérieur de la digue 3.

Grâce à la disposition des fils conducteurs selon l'art antérieur décrite ci-dessous, des fuites peuvent être détectées dans la couche d'isolation 4 de manière très simple et rapide et celles-ci peuvent être localisées avec une très grande précision et cela en mesurant plus précisément chaque fois la résistance entre deux fils conducteurs 9. Lorsqu'il se produit une fuite au-dessus de deux fils 9, la résistance entre ces deux fils sera en effet plus faible.

Sur la figure 3 où des fils conducteurs V1 ... V5 du premier géotextile 5 sont représentés sous la forme de fils conducteurs H1 ... H6 du deuxième géotextile 6, il se produit à l'endroit du point 10 une fuite. Ainsi, la résistance mesurée entre les fils H2 et H3 et entre les fils V3 et V4 sera inférieure à la résistance entre les autres fils. Par une simple localisation croisée, la fuite 10 peut donc être localisée avec une très grande précision.

Au lieu de mesurer la résistance entre deux fils 9, on peut également mesurer l'intensité de courant après application d'une tension à ces deux fils 9. Etant donné que l'intensité de courant est inversement proportionnelle à la résistance, le lieu de la fuite pourra être reconnu à une intensité de courant augmentée.

Afin de détecter des fuites dans la couche d'isolation 4, il suffit donc de mesurer les résistances entre les extrémités des fils conducteurs 9 le long du côté accessible des géotextiles 5, 6. Selon l'invention, on a trouvé qu'il ne faut pas à cet effet nécessairement mesurer la résistance entre tous les fils 9, mais on pourrait mesurer la résistance entre tous les fils 9, mais on pourrait mesurer la résistance entre deux fils 9 chaque fois sur une plus grande distance, par exemple à chaque mètre.

Suivant l'invention, on prévoit donc chaque fois une paire de fils conducteurs 9 situés plus près l'un de l'autre dans le géotextile 5, 6 à une plus grande distance l'un de l'autre. De cette manière, on doit effectuer moins de mesures, tandis qu'on peut tout de même déjà mesurer une intensité de courant pour des tensions relativement faibles.

## Revendications

1. Procédé de détection et de localisation de fuites dans une couche d'isolation (14), procédé selon lequel on dispose sous cette couche d'isolation (14) un premier et un second jeu de fils conducteurs sensiblement parallèles (9) de telle sorte que les fils conducteurs du premier jeu forment un angle avec les fils conducteurs du second jeu, les fils conducteurs du premier jeu étant isolés par rapport à ceux du second jeu, tandis qu'on applique une tension électrique au moins entre deux fils conducteurs et cela aussi bien dans le premier jeu que dans le second jeu et on détermine l'intensité de courant et/ou la résistance entre ces deux fils conducteurs, caractérisé en ce que dans chaque jeu les fils conducteurs (9) sont disposés par paire de telle sorte que la distance entre les fils conducteurs (9) d'une paire est chaque fois sensiblement inférieure à la distance entre deux paires de fils conducteurs, et on détermine ladite tension électrique et/ou ladite résistance entre deux fils conducteurs (9) appartenant à une paire, les fils conducteurs de chaque jeu étant chaque fois portés par un géotextile (5, 6).

2. Procédé selon la revendication 1, caractérisé en ce que les géotextiles (5, 6) sont disposés de manière telle, l'un par rapport à l'autre, que les fils conducteurs (9) du premier géotextile (5) forment un angle d'approximativement 90° avec les fils conducteurs (9) du second géotextile (6).

3. Procédé selon l'une des revendications 1 ou 2, caractérisé en ce qu'on dispose une couche d'isolation (7) entre les deux géotextiles (5, 6).

4. Procédé selon la revendication 3, caractérisé en ce qu'on utilise comme couche d'isolation (7) un non-tissé en matière synthétique.

5. Procédé selon l'une des revendications 1 à 4, caractérisé en ce qu'on applique les géotextiles (5, 6) de manière telle que les fils conducteurs (9) soient accessibles au moins d'un côté.

6. Procédé selon l'une des revendications 1 à 5, caractérisé en ce que lesdits géotextiles sont formés par un tissu (18) dans lequel les fils conducteurs (9) sont tissés.

7. Procédé selon l'une des revendications 1 à 5, caractérisé en ce que lesdits géotextiles (5, 6) sont formés par une membrane non-tissée.

8. Procédé selon l'une des revendications 1 à 7, caractérisé en ce que les fils conducteurs (9) sont des fils métalliques.

9. Procédé selon l'une des revendications 1 à 8, caractérisé en ce que les fils conducteurs (9) sont formés par des fils conducteurs en polymère.

## Patentansprüche

1. Verfahren zum Feststellen oder Lokalisieren von Undichtigkeiten in einer Isolierschicht (14), wobei man unter dieser Isolierschicht (14) einen ersten und einen zweiten Satz im wesentlichen paralleler leitender Fäden (9) derart anordnet, daß die leitenden Fäden des ersten Satzes einen Winkel mit den leitenden Fäden des zweiten Satzes bilden, wobei die leitenden Fäden des ersten Satzes gegenüber denen des zweiten Satzes isoliert sind, wobei man eine elektrische Spannung mindestens zwischen zwei leitenden Fäden sowohl des ersten wie des zweiten Satzes anlegt und die Stromstärke und/oder den Widerstand zwischen diesen beiden Sätzen leitender Fäden bestimmt, **dadurch gekennzeichnet**, daß jeder Satz leitender Fäden (9) paarweise derart angeordnet sind, daß der Abstand zwischen den leitenden Fäden (9) eines Paares jedesmal wesentlich unter dem Abstand zwischen zwei Paaren leitender Fäden liegt und man die elektrische Spannung und/oder den Widerstand zwischen zwei zu einem Paar gehörigen leitenden Fäden bestimmt, wobei die leitenden Fäden jedes Satzes je von einem Geotextil (5, 6) getragen werden.

2. Verfahren nach Anspruch 1, **dadurch gekennzeichnet**, daß die Geotextilien (5, 6) zueinander derart angeordnet sind, daß die leitenden Fäden (9) des ersten Geotextils (5) einen Winkel von etwa 90° mit den leitenden Fäden (9) des zweiten Geotextils (6) bilden.

3. Verfahren nach einem der Ansprüche 1 oder 2, **dadurch gekennzeichnet**, daß man eine Isolationsschicht (7) zwischen den Geotextilien (5, 6) anordnet.

4. Verfahren nach Anspruch 3, **dadurch gekennzeichnet**, daß man als Isolationsschicht ein synthetisches Vlies verwendet.

5. Verfahren nach einem der Ansprüche 1 bis 4, **dadurch gekennzeichnet**, daß man die Geotextilien (5, 6) derart anordnet, daß die leitenden Fäden (9) wenigstens von einer Seite zugänglich sind.

6. Verfahren nach einem der Ansprüche 1 bis 5, **dadurch gekennzeichnet**, daß die Geotextilien von einem Gewebe (18) gebildet werden, in das die leitenden Fäden (9) eingewebt sind.

7. Verfahren nach einem der Ansprüche 1 bis 5, **dadurch gekennzeichnet**, daß die Geotextilien die Form einer Vlies-Membran aufweisen.

8. Verfahren nach einem der Ansprüche 1 bis 7, **dadurch gekennzeichnet**, daß die leitenden Fäden (9) metallische Fäden sind.

9. Verfahren nach einem der Ansprüche 1 bis 8, **dadurch gekennzeichnet**, daß die leitenden Fäden (9) aus polymeren leitenden Fäden bestehen.

## Claims

1. A method of detecting and locating leaks in a separating layer (14), wherein a first and a second set of substantially parallel conductor filaments (9) are disposed below the said separating layer (14) in such a manner that the conductor filaments of the first set form an angle with the conductor filaments of the second set, the conductor filaments of the first set being insulated with respect to those of the second set, whilst an electrical potential is applied between at least two conductor filaments, both within the first set and within the second set, and the current intensity and/or the resistance is determined between these two conductor filaments, characterised in that in each set the conductor filaments (9) are disposed in pairs in such a manner that the distance between the conductor filaments (9) of one pair is substantially less each time than the distance between two pairs of conductor filaments, and the said electrical potential and/or the said resistance is determined between two conductor filaments (9) belonging to one pair, the conductor filaments of each set being supported each time by a geotextile (5, 6).

2. A method according to claim 1, characterised in that the geotextiles (5, 6) are disposed in relation to each other in such a manner that the conductor filaments (9) of the first geotextile (5) form an angle of approximately 90° with the conductor filaments (9) of the second geotextile (6).

3. A method according to either one of claims 1 or 2, characterised in that an insulating layer (7) is disposed between the two geotextile (5, 6).

4. A method according to claim 3, characterised in that a non-woven synthetic material is used as the insulating layer.

5. A method according to any one of claims 1 to 4, characterised in that the geotextiles (5, 6) are applied in a manner such that the conductor filaments (9) are accessible from at least one side.

6. A method according to any one of claims 1 to 5, characterised in that the said geotextiles are formed by a fabric (18) in which the conductor filaments (9) are woven.

7. A method according to any one of claims 1 to 5, characterised in that the said geotextiles (5, 6) are formed by a non-woven membrane.

8. A method according to any one of claims 1 to 7, characterised in that the conductor filaments (9) are metal wires.

9. A method according to any one of claims 1 to 8, characterised in that the conductor filaments (9) are formed from conductor filaments made of polymer.
